# EUROPEAN PATENT SPECIFICATION

(11) **EP 3 102 000 B1**
(45) Date of publication and mention of the grant of the patent: **07.07.2021**
(21) Application number: 16001130.0
(22) Date of filing: 18.05.2016
(51) Int. Cl.: H05B 3/84, H05B 3/86

(54) **STACKED PLATE FOR WINDOW AND METHOD OF MANUFACTURING STACKED PLATE FOR WINDOW**
GESTAPELTE PLATTE FÜR FENSTER UND VERFAHREN ZUR HERSTELLUNG DER GESTAPELTEN PLATTE FÜR FENSTER
PLAQUE EMPILÉE POUR FENÊTRE ET PROCÉDÉ DE FABRICATION DE PLAQUE EMPILÉE POUR FENÊTRE

(30) Priority: 26.05.2015 JP 2015106392; 31.03.2016 JP 2016072583
(43) Date of publication of application: 07.12.2016
(73) Proprietor: AGC Inc., Tokyo 100-8405 (JP)
(72) Inventor: Kosaka, Yoshio, Tokyo, 100-8405 (JP); Sase, Masayuki, Tokyo, 100-8405 (JP); Shimada, Takashi, Tokyo, 100-8405 (JP)
(74) Representative: Müller-Boré & Partner Patentanwälte PartG mbB

(56) References cited:
- EP-A2- 1 688 284
- DE-C1- 3 410 117
- US-A- 3 790 745
- US-A- 6 008 473

## Description

The present invention relates to a stacked plate for window and a method of manufacturing a stacked plate for window.

A window glass for a vehicle, which is a typical example of a stacked plate for a window, that includes a laminated glass and a conductive layer provided inside of the laminated glass is known (see Patent Document 1, for example). The conductive layer includes a heater circuit, for example, and is used for melting ice or snow that is adhered on the window glass, removing fogging of the window glass due to dew condensation or the like.

Conventionally, the conductive layer is formed by coating a conductive paste at a part of a surface of the glass plate and baking it. In such a case, stress due to a difference in thermal expansion between the conductive paste and the glass plate is easily generated in the glass plate and there is a risk that the strength is lowered.

Here, such a problem may occur for a resin plate for window, not limited to a window glass.

### [Patent Document]

[Patent Document 1] Japanese Laid-open Patent Publication No. 2012-140086

US 3 790 745 relates to a stacked plate for window according to the preamble of claim 1.

The present invention is made in light of the above problems, and provides a stacked plate for window for which the strength is not easily lowered, according to the features of claim 1. The invention also relates to a method of manufacturing such a stacked plate for window according to the features of claim 7.

Other objects, features and advantages of the present invention will become more apparent from the following detailed description when read in conjunction with the accompanying drawings.
Fig. 1 is an elevation view of a window glass of an embodiment in which a structure of a stacked sheet is perspectively illustrated;
Fig. 2 is a cross-sectional view of a lower portion of the window glass of the embodiment;
Fig. 3 is a cross-sectional view of the stacked sheet of the embodiment;
Fig. 4 is a flowchart illustrating a method of manufacturing the window glass of the embodiment;
Fig. 5 is an elevation view of the stacked sheet of a first alternative example;
Fig. 6 is an elevation view of the stacked sheet of a second alternative example;
Fig. 7 is an elevation view of the stacked sheet of a third alternative example; and
Fig. 8A and Fig. 8B are elevation views of the stacked sheet of a fourth alternative example.

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

In the following embodiment, a window glass is exemplified as an example of a stacked plate for window.

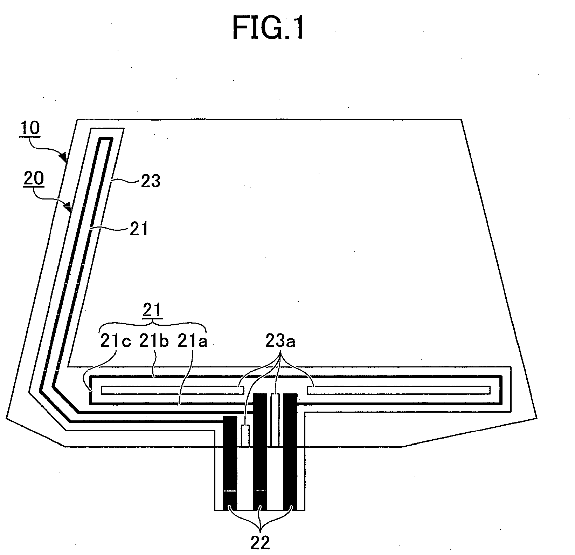

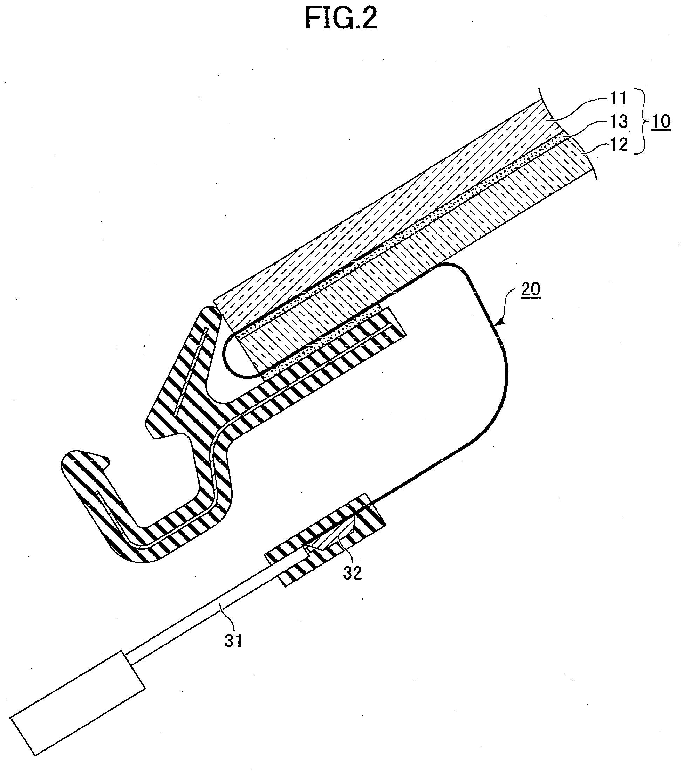

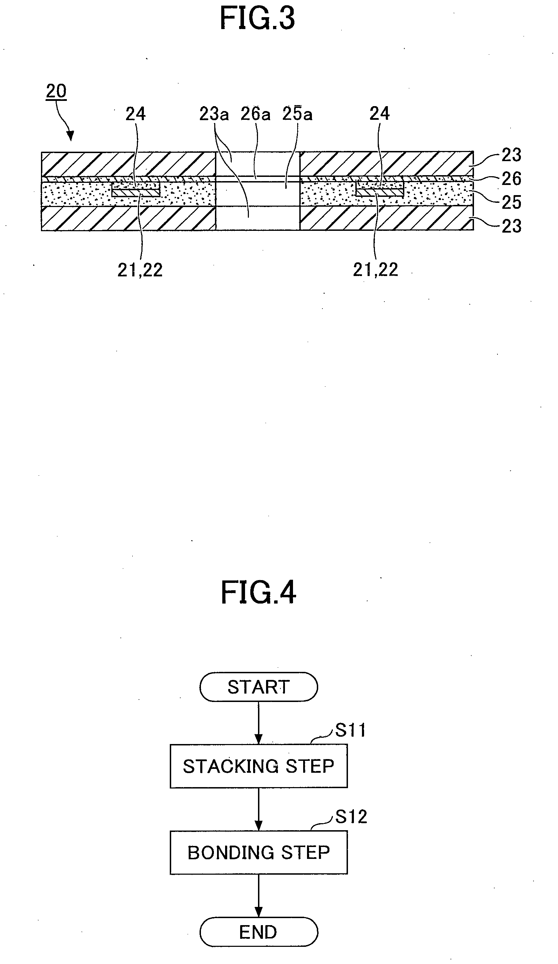

Fig. 1 is an elevation view of a window glass of the embodiment in which a structure of a stacked sheet 20 is perspectively illustrated. Fig. 2 is a cross-sectional view of a lower portion of the window glass of the embodiment. Fig. 3 is a cross-sectional view of the stacked sheet 20 of the embodiment.

The window glass is attached to a window. The window may be a window of a building, a window of a vehicle or the like, and may be a window of a vehicle (car), for example. The window glass may be a windshield of a vehicle. The window glass includes a laminated glass 10 as a laminated plate, and the stacked sheet 20.

As illustrated in Fig. 2, the laminated glass 10 includes a first glass plate 11 as a first transparent plate, a second glass plate 12 as a second transparent plate and an intermediate film 13. The laminated glass 10 is curved along a body of a vehicle. The laminated glass 10 may have a shape corresponding to its purpose and may be flat.

The first glass plate 11 is provided further outside of the vehicle with respect to the second glass plate 12. Each of the first glass plate 11 and the second glass plate 12 may be formed into a tabular shape by a float process, for example, and thereafter may be bent at a high temperature by a gravity die casting, pressing or the like. Each of the first glass plate 11 and the second glass plate 12 may be a non-strengthened glass, a strengthened glass or the like. The strengthened glass may be a thermally strengthened glass, a chemically strengthened glass or the like.

The intermediate film 13 bonds the first glass plate 11 and the second glass plate 12. The intermediate film 13 is made of general resin such as polyvinylbutyral resin (PVB), ethylene-vinylacetate copolymer resin (EVA) or the like, for example. The intermediate film 13 may have a single layered structure or a multiple layered structure.

The number of the glass plates that compose the laminated glass 10 is not limited to two, and may be three or more. In order to bond three or more of the glass plates, the laminated glass 10 may include two or more of the intermediate films 13.

The stacked sheet 20 is inserted between the first glass plate 11 and the second glass plate 12, and is fixed by the intermediate film 13. The stacked sheet 20 may be a heater sheet that heats the laminated glass 10, for example. The heater sheet is used for melting ice or snow adhered on the window glass. As the ice or the snow adheres on a surface of the window glass that is outside of the vehicle, the ice or the snow can be effectively melted when the heater sheet is provided between the first glass plate 11 and the intermediate film 13.

Here, although the heater sheet of the embodiment is used as a deicer that melts the ice or the snow adhered on the window glass, alternatively, the heater sheet of the embodiment may be used as a defogger that removes fogging of the window glass due to dew condensation. As the dew condensation occurs at a surface of the window glass that is inside of the vehicle, the fogging can be effectively removed when the heater sheet is provided between the second glass plate 12 and the intermediate film 13. The position of the heater sheet may be changed in accordance with its purpose. When the intermediate film 13 has a multi-layered structure, the heater sheet may be provided inside of the intermediate film 13.

As illustrated in Fig. 1 and Fig. 3, the stacked sheet 20 may include a plurality of conductive wires 21, a plurality of feeding points 22 (electrodes) and a plurality of insulating sheets 23.

The conductive wires 21 are provided between the first glass plate 11 and the second glass plate 12, and as illustrated in Fig, 1, provided inside of the laminated glass 10. Each of the conductive wires 21 forms a heater circuit that generates heat by supplying electric power. The conductive wires 21 may be provided at both of a lower end portion of the window glass and a side end portion of the window glass.

A wiper is attached to the window glass. The wiper is oscillated between a waiting position, which is a lower end portion of the window glass, and a returning position, which is a side end portion of the window glass, and wipes dirt such as rain or the like adhered on a surface of the window glass that is outside of the vehicle.

As the conductive wires 21 are provided at both the lower end portion of the window glass and the side end portion of the window glass, both of the waiting position and the returning position of the wiper can be heated. Alternatively, a single conductive wire 21 may be provided only at the lower end portion of the window glass, for example.

The conductive wire 21 may include adjacent line portions 21a and 21b and folding portions 21c that connect the line portions 21a and 21b. By forming such folding portions 21c in the conductive wire 21, the plurality of feeding points 22 can be placed at one portion of the laminated glass 10. Thus, the plurality of feeding points 22 can be taken out from the one portion of the laminated glass 10.

The conductive wire 21 may have a loop shape in which both ends are connected to the feeding points 22 that are adjacent to each other. One end of the conductive wire 21 is connected to a positive feeding point 22 and the other end of the conductive wire 21 is connected to a negative feeding point 22 wherein the positive feeding point 22 and the negative feeding point 22 are provided to be adjacent to each other.

The feeding points 22 supply electric power to the conductive wire 21. The feeding points 22 are formed at both end portions of the conductive wire 21. When the plurality of conductive wires 21 are formed, the plurality of conductive wires 21 may use the same feeding point 22. With this configuration, the number of the feeding points 22 can be reduced.

In order to suppress heat generation, each of the electrodes 22 is formed to have electric conductivity higher than that of the conductive wire 21 and have a width greater than that of the conductive wire 21. Alternatively, as each of the feeding points 22 is formed to have electric conductivity higher than that of the conductive wire 21, and, for example, each of the feeding points 22 may have a thickness greater than that of the conductive wire 21.

A conductive layer is constituted by the plurality of conductive wires 21 and the plurality of feeding points 22. Here, as described above, the number of the conductive wires 21 may be one, and the conductive layer may be constituted by a single conductive wire 21 and the plurality of feeding points 22.

The conductive layer is formed of a conductive material and is formed of metal, for example. As the metal, although it is not specifically limited, gold, silver, nickel, copper, aluminum, tin, cobalt, an alloy including at least one of such elements (metals) or the like may be used, for example.

The conductive layer may be integrally formed by forming a pattern on a metal foil, for example. In such a case, as illustrated in Fig. 3, the conductive layer (21, 22) may be bonded to the insulating sheet 23 by a joining layer 24. The joining layer 24 may be made of an adhesive agent, for example.

The conductive layer may be formed by depositing a metal film at a surface of the insulating sheet 23. The metal film is deposited by vapor deposition, sputtering, or baking of a conductive paste such as a metal paste or the like, for example. The metal film may be formed into a desired pattern after being deposited, or may be formed to have a desired pattern when being deposited. For the former patterning, photolithography or etching is used, and for the latter pattering, a masking tape, screen printing or the like is used.

Each of the insulating sheets 23 is made of an insulating material, and is made of resin, for example. The resin has good flexibility. As the resin, although it is not specifically limited, polyethylene terephthalate, polypropylene, polyethylene, polyimide or the like is used, for example. The insulating sheet 23 may be made of paper. When the plurality of insulating sheets 23 are used, one of the insulating sheets 23 may be made of a material the same as that of the other insulating sheet 23 or may be made of a different material from that of the other insulating sheet.

The insulating sheet 23 retains the conductive layer. With this configuration, the shape of the conductive layer can be retained and damage to the conductive layer can be suppressed. With this configuration, handling such as carrying, storage keeping or the like is easy.

As illustrated in Fig. 1, the insulating sheets 23 may be formed to be larger than the conductive layer (21, 22). In other words, the insulating sheet 23 may retain the entirety of the conductive layer.

As illustrated in Fig. 1 and Fig. 3, the insulating sheets 23 may be provided with through-holes 23a. The intermediate film 13 enters the through-holes 23a, and the intermediate film 13 bonds the first glass plate 11 and the second glass plate 12 through the through-holes 23a. As illustrated in Fig. 1, the through-holes 23a may be formed between the feeding points 22 that are adjacent to each other. Further, as illustrated in Fig. 1, the through-holes 23a may be formed between the line portions 21a and 21b that are adjacent to each other. Further, the through-holes 23a may be formed inside of the loop shaped conductive wire 21. Here, inside of the conductive wire 21 means inside of an interface formed by the conductive wire 21 and a line connecting the ends of the conductive wire 21.

Further, a through-hole 23a may be formed between other conductive wires 21, not illustrated in the drawings, that are adjacent to each other. For example, a through-hole 23a may be provided between the other conductive wires 21 that are aligned in upper and lower directions at the lower end portion of the window glass.

The insulating sheets 23 may be taken out from inside of the laminated glass 10 to outside with the feeding points 22. With this configuration, the shape of the feeding points 22 can be retained and damage to the feeding points 22 can be suppressed outside of the laminated glass 10.

The insulating sheet 23 may be provided at only one surface of the conductive layer (outside of the vehicle or inside of the vehicle, for example), or alternatively, as illustrated in Fig. 3, the insulating sheets 23 may be provided at both surfaces of the conductive layer (outside of the vehicle and inside of the vehicle, for example) and may interpose the conductive layer therebetween. With this configuration, the conductive layer can be protected from both surfaces.

The plurality of insulating sheets 23 may be bonded by a sheet bonding layer 25. The sheet bonding layer 25 may be made of an adhesive agent or the like. The sheet bonding layer 25 may be configured to be capable of being peeled from the conductive layer. With this configuration, the insulating sheet 23 may be removed. The sheet bonding layer 25 may be provided with through-holes 25a. The through-holes 25a of the sheet bonding layer 25 are continuously formed with the through-holes 23a of the insulating sheets 23 and the intermediate film 13 enters therein.

A release agent layer 26 may be formed at a surface of one of the insulating sheets 23 (upper insulating sheet in Fig. 3) that is facing the other of the insulating sheets 23 (lower insulating sheet in Fig. 3). The release agent layer 26 is provided between the upper insulating sheet 23, and the joining layer 24 and the sheet bonding layer 25 so that these layers can be peeled. With this configuration, the upper insulating sheet 23 can be removed. The release agent layer 26 may be provided with through-holes 26a. The through-holes 26a of the release agent layer 26 are continuously formed with the through-holes 23a of the insulating sheets 23 and the intermediate film 13 enters therein.

Here, in this embodiment, as the upper insulating sheet 23 is used in the window glass without being removed, the release agent layer 26 may not be formed between the upper insulating sheet 23, and the joining layer 24 and the sheet bonding layer 25. Similarly, the sheet bonding layer 25 may not be capable of being peeled from the conductive layer. An example in which a part of the upper insulating sheet 23 is removed and a remaining portion of the upper insulating sheet 23 is used for the window glass will be explained later.

The insulating sheets 23 may be colored to have a dark color such as black, or may be opaque. With this configuration, the conductive layer can be shaded from one of the surfaces or both of the surfaces. When the insulating sheets 23 are transparent, a shielding layer with a dark color such as black may be included in the stacked sheet 20. The shielding layer may be formed at one surface or both surfaces of the conductive layer. The shielding layer is formed by pigment, plating or the like.

Fig. 4 is a flowchart illustrating a method of manufacturing the window glass of the embodiment. The method of manufacturing the window glass includes a stacking step S11 and a bonding step S12.

In the stacking step S11, the first glass plate 11 and the second glass plate 12 are stacked via the intermediate film 13. At this time, the stacked sheet 20 is provided between the first glass plate 11 and the second glass plate 12. Although the stacked sheet 20 is provided between the first glass plate 11 and the intermediate film 13 in this embodiment, alternatively, the stacked sheet 20 may be provided between the second glass plate 12 and the intermediate film 13. Further, when the intermediate film 13 has a multi-layered structure, the stacked sheet 20 may be provided inside of the intermediate film 13. The conductive wires 21 may be provided between the first glass plate 11 and the second glass plate 12, and the feeding points 22 and the insulating sheets 23 may be taken out from an interface between the first glass plate 11 and the second glass plate 12 to outside.

In the bonding step S12, the first glass plate 11 and the second glass plate 12 are bonded with the intermediate film 13 by thermo-compression bonding or the like. At this time, the insulating sheets 23 are bonded to the intermediate film 13 between the first glass plate 11 and the second glass plate 12. With this, the window glass illustrated in Fig. 1 and Fig. 2 is obtained. The window glass includes the laminated glass 10 and the stacked sheet 20.

As described above, according to the embodiment, the insulating sheet 23 retains the conductive layer, and is bonded to the intermediate film 13 between the first glass plate 11 and the second glass plate 12. Thus, different from the conventional method in which the conductive layer is formed by coating a conductive paste at a surface of the first glass plate 11 that at is the inner side of the vehicle and baking it, a space larger than the first glass plate 11 is unnecessary for forming the conductive layer, and the conductive layer can be easily formed. Further, different from the conventional method of forming the conductive layer, stress due to a difference in thermal expansion between the conductive paste and the glass plate does not occur in the glass plate. Thus, cracks of the glass plate can be suppressed. These effects can be obtained even when the conductive layer is not taken out from inside of the laminated glass 10 to outside.

Further, according to the embodiment, a part of the insulating sheets 23 is taken out from inside of the laminated glass 10 to outside with the conductive layer. Thus, following effects (1) to (3) can be obtained.
(1) Different from the conventional method in which the conductive layer is formed by coating a conductive paste at a surface of the first glass plate 11 that is at the inner side of the vehicle and baking it, it is unnecessary to provide a notch in the second glass plate 12 for exposing the conductive layer at the inside of the vehicle. Conventionally, the notch is necessary to attach a terminal or a lead wire on the conductive layer by solder. On the other hand, according to the embodiment, as the notch is unnecessary, there is not a step at a surface of the laminated glass 10 that is inside of the vehicle, and the laminated glass 10 and a body of the vehicle can be easily sealed.
(2) As the conductive layer is taken out at the outside of the laminated glass 10, a terminal or a lead wire can be attached on the conductive layer by solder at the outside of the laminated glass 10. Thus, it is unnecessary to be concerned about a difference in thermal expansion between solder and the glass when soldering. In Fig. 2, an electric wire of a wire harness 31 is connected to the feeding points 22 at the outside of the laminated glass 10 by solder 32.
(3) The insulating sheets 23 can retain the shape of the conductive layer at the outside of the laminated glass 10 and damage to the conductive layer can be suppressed.

Further, according to the embodiment, a part of the insulating sheets 23 is taken out from the inside of the laminated glass 10 to the outside with the feeding points 22. Thus, the conductive wires 21 can be provided only at the inside of the laminated glass 10 and position shift of the conductive wires 21 by external forces can be suppressed and further, heat generation at the outside of the laminated glass 10 can be prevented.

Further, when the first glass plate 11 and the second glass plate 12 have a curved shape, as described above, the first glass plate 11 and the second glass plate 12 are bent at a high temperature. However, according to the embodiment, the stacked sheet 20 including the conductive layer is fixed by the intermediate film 13 after the first glass plate 11 and the second glass plate 12 are bent. Thus, different from the conventional method in which the glass plate is bent at a high temperature and also the conductive paste coated at a surface of the glass plate is baked, stress due to a difference in thermal expansion between the conductive paste and the glass plate in baking does not occur in the glass plate. Thus, cracks of the first glass plate 11 and the second glass plate 12 can be suppressed and the conductive layer can be easily formed.

In particular, when the conductive wires 21 are provided inside of an outer peripheral end of the glass plate along the outer peripheral end, a following problem that may occur in the conventional method can be prevented. For the conventional method, the glass plate is bent at a high temperature and also the conductive paste coated at a surface of the glass plate is baked. In such a case, conventionally, there is a problem that a region at which stress is generated in the glass plate due to a difference in thermal expansion with the conductive paste, and a region at which internal tensile stress (so-called an inner tension) is generated in the glass plate due to cooling after bending the glass plate overlap in a plan view (projection view in a thickness direction of the glass plate), and the strength of the glass plate is lowered around the conductive paste. According to the embodiment, as the conductive paste is not baked on the glass plate, this problem does not occur.

Here, as can be easily understood by those skilled in the art, the inner tension means a tension that is formed at the inside of an outer peripheral end of the glass plate when the glass plate heated to nearly its softening point is cooled. The glass plate is cooled from the outer peripheral end and edge compression is formed at the outer peripheral end of the glass plate. The inner tension is formed at the inside of the outer peripheral end of the glass plate as a counterpart of the edge compression.

Further, according to the embodiment, the insulating sheets 23 are provided with the through-holes 23a, and the intermediate film 13 enters the through-holes 23a so that the intermediate film 13 bonds the first glass plate 11 and the second glass plate 12 through the through-holes 23a or the like. Thus, the insulating sheets 23 can be rigidly retained. Further, bonding strength between the first glass plate 11 and the second glass plate 12 can be improved.

The through-hole 23a may be formed between the adjacent feeding points 22. With this configuration, the insulating sheets 23 can be rigidly retained near the feeding points 22. Further, the bonding strength between the first glass plate 11 and the second glass plate 12 can be improved. Further, when the feeding points 22 are taken out from the inside of the laminated glass 10 to outside with the insulating sheets 23, shaking of the insulating sheets 23 at a position of the laminated glass 10 from which the insulating sheets 23 are taken out can be suppressed.

At least a part of the through-holes 23a may be positioned at a peripheral region of the laminated glass 10. The peripheral region means a region with a predetermined width from the outer peripheral end of the laminated glass toward the inside. The width is about 50 mm, for example. With this, when the feeding points 22 are taken out from the inside of the laminated glass 10 to the outside with the insulating sheets 23, shaking of the insulating sheets 23 at a position of the laminated glass 10 from which the insulating sheets 23 are taken out can be suppressed.

When the conductive wires 21 are used as the deicer or the defogger, the through-holes 23a are particularly preferably used. The reason is as follows. When the conductive wires 21 are used as the deicer or the defogger, compared with a case that the conductive wire 21 is used as an antenna line, it is necessary to form the feeding points 22 thicker. When the feeding point 22 is thicker, there is a possibility that the intermediate film 13 cannot be sufficiently bonded with the first glass plate 11 and the second glass plate 12 around the feeding points 22, and the stacked sheet 20 is pulled out from the laminated glass or is shaky. However, by providing the through-holes 23a, such a possibility can be reduced.

The through-holes 23a may be formed between the line portions 21a and 21b that constitute the conductive wire 21. With this configuration, the insulating sheets 23 can be rigidly retained near the conductive wire 21. Further, the bonding strength between the first glass plate 11 and the second glass plate 12 can be improved.

The through-holes 23a may be formed at the inside of the loop shaped conductive wire 21. With this configuration, the insulating sheets 23 can be rigidly retained at the inside of the loop shaped conductive wire 21. Further, the bonding strength between the first glass plate 11 and the second glass plate 12 can be improved.

A through-hole 23a may be formed between other conductive wires 21, not illustrated in the drawings, that are adjacent to each other. For example, a through-hole 23a may be provided between the other conductive wires 21 that are aligned in upper and lower directions at the lower end portion of the window glass. With this configuration, the insulating sheets 23 can be rigidly retained between the adjacent conductive wires 21. Further, the bonding strength between the first glass plate 11 and the second glass plate 12 can be improved.

According to the embodiment, a stacked plate for window for which the strength is not easily lowered is provided.

Although a preferred embodiment of the stacked plate for window and the method of manufacturing the stacked plate for window has been specifically illustrated and described, it is to be understood that minor modifications may be made therein without departing from the scope of the invention as defined by the claims.

The present invention is not limited to the specifically disclosed embodiments, and numerous variations and modifications may be made without departing from the scope of the present invention.

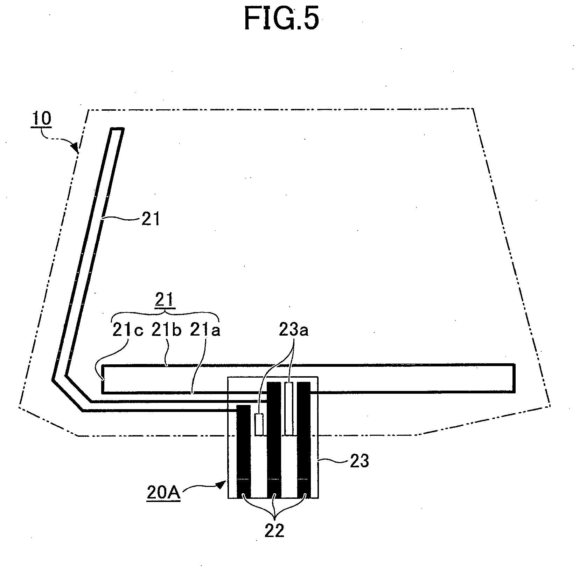

Fig. 5 is an elevation view of a stacked sheet 20A of the first alternative example. In Fig. 5, an outline of the laminated glass is illustrated by a two-dot chain line. The stacked sheet 20A illustrated in Fig. 5 is obtained by removing a part of each of the insulating sheets 23 from the stacked sheet 20 illustrated in Fig. 1. The remaining portions of the insulating sheets 23 are used as the window glass. With this configuration, the insulating sheets 23 can be rigidly retained. Further, the bonding strength between the first glass plate 11 and the second glass plate 12 can be improved.

The stacked sheet 20A illustrated in Fig. 5 is obtained by the following steps (A) to (C). The following steps (A) to (C) are performed in this order. (A) A part of the one of the insulating sheets 23 (upper insulating sheet 23) and a part of the release agent layer 26 illustrated in Fig. 3 are removed from the stacked sheet 20 illustrated in Fig. 1 to expose the joining layer 24. (B) The joining layer 24 is adhered to the first glass plate 11 to fix the conductive layer to the first glass plate 11. (C) A part of the other of the insulating sheets 23 (lower insulating sheet 23) is removed with a part of the sheet bonding layer 25. With this, the first glass plate 11 with the stacked sheet 20A is obtained. The first glass plate 11 with the stacked sheet 20A is used in the stacking step S11 (see Fig. 4). As the conductive layer is fixed to the first glass plate 11 before the step (C), the shape of the conductive layer can be retained even when the part of the lower insulating sheet 23 is removed in the step (C). Here, although the example in which the joining layer 24 is adhered to the first glass plate 11 is described, the joining layer 24 may be adhered to the second glass plate 12 or the intermediate film 13. In such a case, the second glass plate 12 with the stacked sheet 20A or the intermediate film 13 with the stacked sheet 20A is used in the stacking step S11. Further, as described above, the joining layer 24 has a function to bond the metal foil as the conductive layer to the insulating sheet 23, but the joining layer 24 may not have this function. As described above, when the conductive layer is deposited on a surface of the one of the insulating sheets 23, the joining layer 24 is used to fix the conductive layer to the first glass plate 11 or the like before the step (C).

The insulating sheets 23 of the stacked sheet 20A illustrated in Fig. 5 retain the entirety of the feeding points 22 and portions of the conductive wires 21 that are near the feeding points 22. Although the insulating sheets 23 of the stacked sheet 20A retain the conductive wires 21 in this example, the insulating sheets 23 may not retain the conductive wires 21. Further, although the insulating sheets 23 of the stacked sheet 20A retain the entirety of the feeding points 22 in this example, the insulating sheets 23 may retain only a part of the feeding points 22.

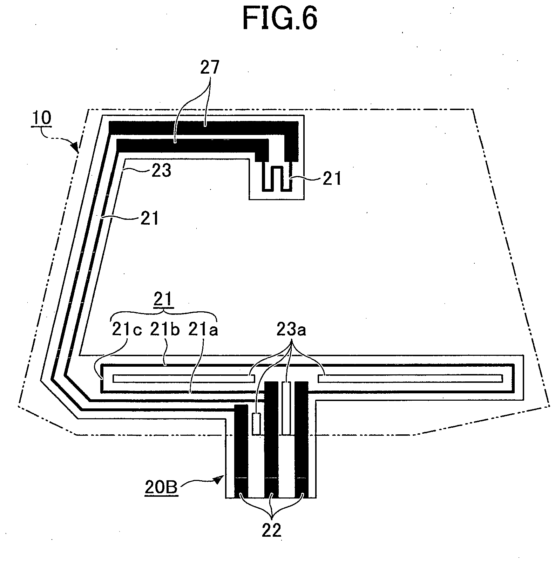

Fig. 6 is an elevation view of a stacked sheet 20B of the second alternative example. In Fig. 6, an outline of the laminated glass is illustrated by a two-dot chain line. The stacked sheet 20B illustrated in Fig. 6 is different from the stacked sheet 20 illustrated in Fig. 1 in that the conductive wire 21 is also provided at an upper center portion of the window glass in addition to the lower end portion of the window glass and the side end portion of the window glass. This structure is effective for a case in which an on-vehicle camera is provided for videotaping or photographing outside of the vehicle via the upper center portion of the window glass. The conductive wire 21 provided at the upper center portion of the window glass and the conductive wire 21 provided at the side end portion of the window glass may be electrically connected by connection lines 27. In order to suppress heat generation, similarly as the feeding points 22, each of the connection lines 27 may be formed to have electric conductivity higher than that of the conductive wire 21 and have a width greater than that of the conductive wire 21. The connection lines 27 are included in the conductive layer and are retained by the insulating sheets 23. Here, parts of the insulating sheets 23 may be removed from the stacked sheet 20B illustrated in Fig. 6, and the remaining portions of the insulating sheets 23 may be used as the window glass. With this configuration, the bonding strength between the first glass plate 11 and the second glass plate 12 can be improved.

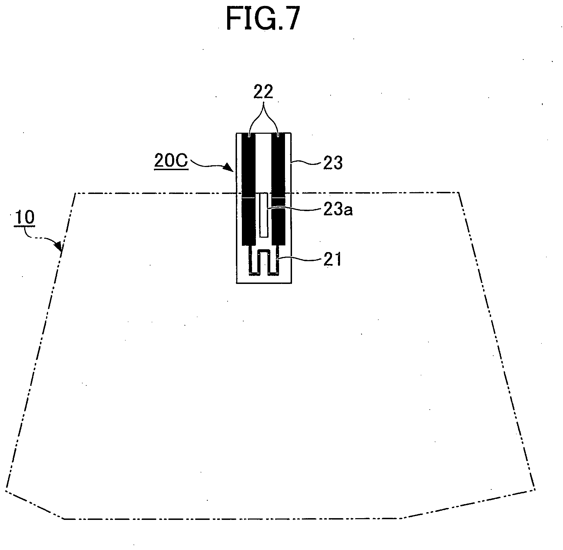

Fig. 7 is an elevation view of a stacked sheet 20C of the third alternative example. In Fig. 7, an outline of the laminated glass is illustrated by a two-dot chain line. The stacked sheet 20C illustrated in Fig. 7 is different from the stacked sheet 20 illustrated in Fig. 1 in that the conductive wire 21 is only provided at the upper center portion of the window glass. The stacked sheet 20C illustrated in Fig. 7 may be used with the stacked sheet 20 illustrated in Fig. 1 or the stacked sheet 20A illustrated in Fig. 5. Here, parts of the insulating sheets 23 may be removed from the stacked sheet 20C illustrated in Fig. 7, and the remaining portions of the insulating sheets 23 may be used as the window glass. With this configuration, the bonding strength between the first glass plate 11 and the second glass plate 12 can be improved.

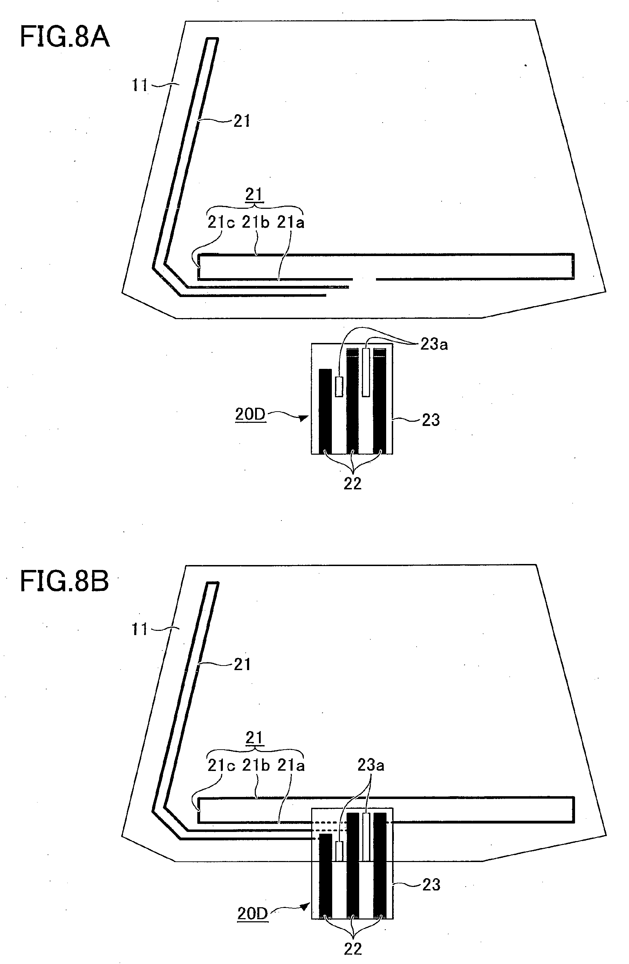

Fig. 8A and Fig. 8B are elevation views of a stacked sheet 20D of the fourth alternative example, wherein Fig. 8A illustrates a status in which the stacked sheet 20D and the conductive wire formed on the first glass plate 11 are not bonded yet and Fig. 8B illustrates a status in which the stacked sheet 20D and the conductive wires on the first glass plate 11 are bonded. The stacked sheet 20D illustrated in Fig. 8 is different from the stacked sheet 20 illustrated in Fig. 1 in that the stacked sheet 20D only includes the feeding points 22 as the conductive layer. This means that the conductive wires 21 may be formed by baking or the like a metal paste formed at a surface of the first glass plate 11, and is independently provided from the stacked sheet 20D. In such a case, stress in the glass plate due to a difference in thermal expansion with the conductive paste can be reduced compared with a case when the feeding points 22 are also formed by baking a conductive paste formed on the glass plate.

In this example, the conductive wires 21 are formed on the surface of the first glass plate 11. The stacked sheet 20D includes the insulating sheets 23 and the feeding points 22. The stacked sheet 20D is provided between the first glass plate 11 and the second glass plate 12. At this time, the conductive wires 21 and the feeding points 22 are electrically connected. Further, the insulating sheets 23 are provided with the through-holes 23a and the intermediate film 13 enters the through-holes 23a so that the intermediate film 13 bonds the first glass plate 11 and the second glass plate 12 through the through-holes 23a or the like. With this, the insulating sheets 23 can be rigidly retained and the insulating sheets 23 are prevented from being pulled out from the inside of the laminated glass 10 to the outside.

When the conductive wires 21 are used as the deicer or the defogger, the through-holes 23a are particularly preferably used. The reason is as follows. When the conductive wires 21 are used as the deicer or the defogger, compared with a case that the conductive wire 21 is used as an antenna line, it is necessary to form the feeding points 22 thicker. When the feeding point 22 is thicker, there is a possibility that the intermediate film 13 cannot be sufficiently bonded with the first glass plate 11 and the second glass plate 12 around the feeding points 22, and the stacked sheet 20 is pulled out from the laminated glass or is shaky. However, by providing the through-holes 23a, such a possibility can be reduced.

Further, in particular, the through-holes 23a may be formed between the adjacent feeding points 22. With this configuration, bonding strength between the first glass plate 11 and the second glass plate 12 near the feeding points 22 can be improved.

Further, at least a part of the through-holes 23a may be positioned at a peripheral region of the laminated glass 10. With this, when the feeding points 22 are taken out from inside of the laminated glass 10 to the outside with the insulating sheets 23, shaking of the insulating sheets 23 at a position of the laminated glass 10 from which the insulating sheets 23 are taken out can be suppressed.

The laminated glass illustrated in Fig. 8A and Fig. 8B is obtained by the following steps (D) to (F). The following steps (D) to (F) are performed in this order. (D) The conductive wires 21 are formed at the surface of the first glass plate 11 by baking a metal paste or the like. (E) A part of the one of the insulating sheets 23 (upper insulating sheet 23) and a part of the release agent layer 26 illustrated in Fig. 3 are removed from the stacked sheet 20D illustrated in Fig. 8A to expose the conductive joining layer 24. (F) Power supply portions of the conductive wire 21 and the feeding points 22 are bonded through the conductive joining layer 24. With this, the first glass plate 11 with the stacked sheet 20D is obtained. The first glass plate 11 with the stacked sheet 20D is used in the stacking step S11 (see Fig. 4).

Here, although the conductive wire 21 is formed at the surface of the first glass plate 11 in this example, the conductive wire 21 may be formed at the surface of the second glass plate 12. In such a case, the conductive wires 21 on the second glass plate 12 are bonded with the feeding points 22 through the joining layer 24. In such a case, the second glass plate 12 with the stacked sheet 20D is used in the stacking step S11.

Here, the conductive wires 21 may contact the feeding points 22 without interposing the joining layer 24 therebetween. For example, the conductive wires 21 and the feeding points 22 may directly make contact, or may make contact through a conductive layer such as solder or the like.

Further, although the stacked sheet 20 of the embodiment and the stacked sheets 20A, 20B and 20C of the alternative examples are described as a heater sheet to heat the laminated glass 10, these may be an antenna sheet that receives electric waves from outside. When the stacked sheet 20 or the like is an antenna sheet, the feeding point 22 may be formed at only one of the ends of the conductive wire 21.

Further, although the part of the insulating sheets 23 is taken out from the inside of the laminated glass 10 to the outside with the feeding points 22 in the above described embodiment and the alternative examples, the part of the insulating sheets 23 may be taken out from the inside of the laminated glass 10 to the outside with the conductive wires 21.

Further, although the conductive layer includes the conductive wires 21 and the feeding points 22 in the above described embodiment and the alternative examples, the conductive layer may include only the conductive wire 21. The conductive wire 21 may have power supplied from external electrodes.

Further, although the structure in which the glass plates are bonded by the intermediate film is described as the laminated plate in the above described embodiment and the alternative examples, a structure in which resin plates are bonded by an intermediate film may be used, or a structure in which a glass plate and a resin plate are bonded by an intermediate film may be used. This means that the first transparent plate may be either a glass plate or a resin plate. Further, the second transparent plate may be either a glass plate or a resin plate.

## Claims

1. A stacked plate for window comprising:
a laminated plate (10) that includes
a first transparent plate (11),
a second transparent plate (12) that faces the first transparent plate (11), and
an intermediate film (13) that bonds the first transparent plate (11) and the second transparent plate (12);
a conductive layer (21, 22), at least a part of which is provided between the first transparent plate (11) and the second transparent plate (12); and
an insulating sheet (23) that retains the conductive layer (21, 22), the insulating sheet (23) being bonded to the intermediate film (13) between the first transparent plate (11) and the second transparent plate (12),
the conductive layer (21, 22) includes a conductive wire (21) and a feeding point (22) that supplies electric power to the conductive wire (21), the conductive wire (21) and the feeding point (22) being integrally formed, a part of the insulating sheet (23) is taken out from the inside of the laminated plate (10) to the outside with the feeding point (22), and
**characterized in that** the conductive wire (21) forms a heater circuit that generates heat by supplying electric power.

2. The stacked plate for window according to claim 1 , wherein the insulating sheet (23) is provided with a through-hole (23a) and the intermediate film (13) enters the through-hole (23a) to bond the first transparent plate (11) and the second transparent plate (12) through the through-hole (23a).

3. The stacked plate for window according to claim 2, wherein the conductive layer (21, 22) includes a plurality of feeding points (22), and the through-hole (23a) is formed between the feeding points (22).

4. The stacked plate for window according to claim 2 or 3, wherein the conductive layer (21, 22) includes a conductive wire (21) that includes a plurality of line portions (21a, 21b), and the through-hole (23a) is formed between the line portions (21a, 21b).

5. The stacked plate for window according to claim 3 or 4,
wherein the conductive layer (21, 22) includes a plurality of feeding points (22),
wherein both ends of the conductive wire (21) are connected to the feeding points (22) and the conductive wire (21) has a loop shape, and
wherein the through-hole (23a) is formed inside of the loop shaped conductive wire (21).

6. The stacked plate for window according to one of claims 1 to 5, wherein the stacked plate for window has a curved shape.

7. A method of manufacturing a stacked plate for window including
a laminated plate (10) that includes
a first transparent plate (11),
a second transparent plate (12) that faces the first transparent plate (11), and
an intermediate film (13) that bonds the first transparent plate (11) and the second transparent plate (12);
a conductive layer (21, 22), at least a part of which is provided between the first transparent plate (11) and the second transparent plate (12); and
an insulating sheet (23) that retains the conductive layer (21, 22),
the conductive layer (21, 22) includes a conductive wire (21) and a feeding point (22) that supplies electric power to the conductive wire (21), the conductive wire (21) and the feeding point (22) being integrally formed, a part of the insulating sheet (23) is taken out from the inside of the laminated plate (10) to the outside with the feeding point (22), and the conductive wire (21) forms a heater circuit that generates heat by supplying electric power,
the method comprising:
bonding the first transparent plate (11) and the second transparent plate (12) by the intermediate film (13) in which the insulating sheet (23) is bonded to the intermediate film (13) between the first transparent plate (11) and the second transparent plate (12).

8. The method of manufacturing a stacked plate for window according to claim 7, wherein the insulating sheet (23) is provided with a through-hole (23a), and the intermediate film (13) enters the through-hole (23a) to bond the first transparent plate (11) with the second transparent plate (12) through the through-hole (23a).

## Patentansprüche

1. Gestapelte Platte für Fenster, umfassend:
eine laminierte Platte (10), die enthält
eine erste transparente Platte (11)
eine zweite transparente Platte (12), die der ersten transparenten Platte (11) gegenüberliegt, und
einen Zwischenfilm (13), der die erste transparente Platte (11) und die zweite transparente Platte (12) verbindet;
eine leitende Schicht (21, 22), von der zumindest ein Teil zwischen der ersten transparenten Platte (11) und der zweiten transparenten Platte (12) vorgesehen ist; und
eine isolierende Folie (23), die die leitende Schicht (21, 22) stützt, wobei die isolierende Folie (23) mit dem Zwischenfilm (13) zwischen der ersten transparenten Platte (11) und der zweiten transparenten Platte (12) verbunden ist,
die leitende Schicht (21, 22) einen leitenden Draht (21) und einen Einspeisepunkt (22) enthält, der den leitenden Draht (21) mit elektrischer Energie versorgt, wobei der leitende Draht (21) und der Einspeisepunkt (22) einstückig ausgebildet sind,
ein Teil der isolierenden Folie (23) von der Innenseite der laminierten Platte (10) mit dem Einspeisepunkt (22) nach außen herausgeführt wird, und
**dadurch gekennzeichnet ist, dass** der leitende Draht (21) einen Heizkreis bildet, der durch Zufuhr von elektrischer Energie Wärme erzeugt.

2. Gestapelte Platte für Fenster nach Anspruch 1, wobei die isolierende Folie (23) mit einem Durchgangsloch (23a) versehen ist und der Zwischenfilm (13) in das Durchgangsloch (23a) eintritt, um die erste transparente Platte (11) und die zweite transparente Platte (12) durch das Durchgangsloch (23a) zu verbinden.

3. Gestapelte Platte für Fenster nach Anspruch 2, wobei die leitende Schicht (21, 22) eine Mehrzahl von Einspeisepunkten (22) aufweist und das Durchgangsloch (23a) zwischen den Einspeisepunkten (22) ausgebildet ist.

4. Gestapelte Platte für Fenster nach Anspruch 2 oder 3, wobei die leitende Schicht (21, 22) einen leitenden Draht (21) enthält, der eine Mehrzahl von Leitungsabschnitten (21a, 21b) enthält, und das Durchgangsloch (23a) zwischen den Leitungsabschnitten (21a, 21b) ausgebildet ist.

5. Gestapelte Platte für Fenster nach Anspruch 3 oder 4,
wobei die leitende Schicht (21, 22) eine Mehrzahl von Einspeisepunkten (22) aufweist,
wobei beide Enden des leitenden Drahtes (21) mit den Einspeisepunkten (22) verbunden sind und der leitende Draht (21) eine Schleifenform aufweist, und
wobei das Durchgangsloch (23a) innerhalb des schleifenförmigen leitenden Drahtes (21) ausgebildet ist.

6. Gestapelte Platte für Fenster nach einem der Ansprüche 1 bis 5, wobei die gestapelte Platte für Fenster eine gekrümmte Form aufweist.

7. Verfahren zur Herstellung einer gestapelten Platte für Fenster, enthaltend eine laminierte Platte (10), die enthält
eine erste transparente Platte (11)
eine zweite transparente Platte (12), die der ersten transparenten Platte (11) gegenüberliegt, und
einen Zwischenfilm (13), der die erste transparente Platte (11) und die zweite transparente Platte (12) verbindet;
eine leitende Schicht (21, 22), von der zumindest ein Teil zwischen der ersten transparenten Platte (11) und der zweiten transparenten Platte (12) vorgesehen ist; und
eine isolierende Folie (23), die die leitende Schicht (21, 22) stützt, wobei die isolierende Folie (23) mit dem Zwischenfilm (13) zwischen der ersten transparenten Platte (11) und der zweiten transparenten Platte (12) verbunden ist,
die leitende Schicht (21, 22) einen leitenden Draht (21) und einen Einspeisepunkt (22) enthält, der den leitenden Draht (21) mit elektrischer Energie versorgt, wobei der leitende Draht (21) und der Einspeisepunkt (22) einstückig ausgebildet sind,
ein Teil der isolierenden Folie (23) von der Innenseite der laminierten Platte (10) mit dem Einspeisepunkt (22) nach außen herausgeführt wird, und
der leitende Draht (21) einen Heizkreis bildet, der durch Zufuhr von elektrischer Energie Wärme erzeugt,
das Verfahren umfassend:
Verbinden der ersten transparenten Platte (11) und der zweiten transparenten Platte (12) durch den Zwischenfilm (13), wodurch die isolierende Folie (23) mit dem Zwischenfilm (13) zwischen der ersten transparenten Platte (11) und der zweiten transparenten Platte (12) verbunden wird.

8. Verfahren zur Herstellung einer gestapelten Platte für Fenster nach Anspruch 7, wobei die isolierende Folie (23) mit einem Durchgangsloch (23a) versehen ist und der Zwischenfilm (13) in das Durchgangsloch (23a) eintritt, um die erste transparente Platte (11) mit der zweiten transparenten Platte (12) durch das Durchgangsloch (23a) zu verbinden.

## Revendications

1. Plaque empilée pour fenêtre comprenant :
une plaque stratifiée (10) qui comporte
une première plaque transparente (11),
une seconde plaque transparente (12) qui fait face à la première plaque transparente (11), et
un film intermédiaire (13) qui lie la première plaque transparente (11) et la seconde plaque transparente (12) ;
une couche conductrice (21, 22), dont au moins une partie est ménagée entre la première plaque transparente (11) et la seconde plaque transparente (12) ; et
une feuille isolante (23) qui retient la couche conductrice (21, 22), la feuille isolante (23) étant liée au film intermédiaire (13) entre la première plaque transparente (11) et la seconde plaque transparente (12),
la couche conductrice (21, 22) comporte un fil conducteur (21) et un point d'alimentation (22) qui alimente en énergie électrique le fil conducteur (21), le fil conducteur (21) et le point d'alimentation (22) étant formés de manière solidaire,
une partie de la feuille isolante (23) est extraite de l'intérieur de la plaque stratifiée (10) vers l'extérieur avec le point d'alimentation (22), et
**caractérisée en ce que** le fil conducteur (21) forme un circuit chauffant qui génère de la chaleur par une alimentation en énergie électrique.

2. Plaque empilée pour fenêtre selon la revendication 1, dans laquelle la feuille isolante (23) est munie d'un trou traversant (23a) et le film intermédiaire (13) pénètre dans le trou traversant (23a) pour lier la première plaque transparente (11) et la seconde plaque transparente (12) à travers le trou traversant (23a).

3. Plaque empilée pour fenêtre selon la revendication 2, dans laquelle la couche conductrice (21, 22) comporte une pluralité de points d'alimentation (22), et le trou traversant (23a) est formé entre les points d'alimentation (22).

4. Plaque empilée pour fenêtre selon la revendication 2 ou 3, dans laquelle la couche conductrice (21, 22) comporte un fil conducteur (21) qui comporte une pluralité de portions de ligne (21a, 21b), et le trou traversant (23a) est formé entre les portions de ligne (21a, 21b).

5. Plaque empilée pour fenêtre selon la revendication 3 ou 4,
dans laquelle la couche conductrice (21, 22) comporte une pluralité de points d'alimentation (22),
dans laquelle les deux extrémités du fil conducteur (21) sont connectées aux points d'alimentation (22) et le fil conducteur (21) possède une forme de boucle, et
dans laquelle le trou traversant (23a) est formé à l'intérieur du fil conducteur en forme de boucle (21).

6. Plaque empilée pour fenêtre selon l'une des revendications 1 à 5, dans laquelle la plaque empilée pour fenêtre possède une forme incurvée.

7. Méthode de fabrication d'une plaque empilée pour fenêtre comportant
une plaque stratifiée (10) qui comporte
une première plaque transparente (11),
une seconde plaque transparente (12) qui fait face à la première plaque transparente (11), et
un film intermédiaire (13) qui lie la première plaque transparente (11) et la seconde plaque transparente (12) ;
une couche conductrice (21, 22), dont au moins une partie est ménagée entre la première plaque transparente (11) et la seconde plaque transparente (12) ; et
une feuille isolante (23) qui retient la couche conductrice (21, 22),
la couche conductrice (21, 22) comporte un fil conducteur (21) et un point d'alimentation (22) qui alimente en énergie électrique le fil conducteur (21), le fil conducteur (21) et le point d'alimentation (22) étant formés de manière solidaire,
une partie de la feuille isolante (23) est extraite de l'intérieur de la plaque stratifiée (10) vers l'extérieur avec le point d'alimentation (22), et
le fil conducteur (21) forme un circuit chauffant qui génère de la chaleur par une alimentation en énergie électrique,
la méthode comprenant :
la liaison de la première plaque transparente (11) et de la seconde plaque transparente (12) par le film intermédiaire (13) dans laquelle la feuille isolante (23) est liée au film intermédiaire (13) entre la première plaque transparente (11) et la seconde plaque transparente (12).

8. Méthode de fabrication d'une plaque empilée pour fenêtre selon la revendication 7, dans laquelle la feuille isolante (23) est munie d'un trou traversant (23a), et le film intermédiaire (13) pénètre dans le trou traversant (23a) pour lier la première plaque transparente (11) avec la seconde plaque transparente (12) à travers le trou traversant (23a).
